# FASCICULE DE BREVET EUROPEEN

(11) **EP 3 678 487 B1**
(45) Date de publication et mention de la délivrance du brevet: **27.03.2024**
(21) Numéro de dépôt: 18773537.8
(22) Date de dépôt: 31.08.2018
(51) Int. Cl.: A01N 37/02, A01N 25/30, A01P 13/00

(54) **COMPOSITION PHYTOPHARMACEUTIQUE À BASE D'ALKYL PENTOSIDE ET D'ACIDE NONANOÏQUE ET SON UTILISATION EN TANT QU'HERBICIDE**
ALKYLPENTOSID- UND NONANSÄURE-BASIERTE PHYTOPHARMAZEUTISCHE ZUSAMMENSETZUNG UND DEREN VERWENDUNG ALS HERBIZID
ALKYL-PENTOSIDE AND NONANOIC ACID-BASED PHYTOPHARMACEUTICAL COMPOSITION AND ITS USE AS HERBICIDE

(30) Priorité: 08.09.2017 FR 1758313
(43) Date de publication de la demande: 15.07.2020
(73) Titulaire: Inoventeam, 62380 Affringues (FR)
(72) Inventeur: VANLAER, Antoine, 75004 Paris (FR); GHILLEBAERT, François, 62380 Affringues (FR)
(74) Mandataire: Ipsilon
(86) Numéro de dépôt international: PCT/FR2018/052137
(87) Numéro de publication internationale: WO 2019/048759

(56) Documents cités:
- WO-A2-2011/095735
- FR-A1- 2 991 688

## Description

### DOMAINE DE L'INVENTION

La présente invention se rapporte à une composition phytopharmaceutique et son utilisation comme herbicide pour la protection des cultures ou des espaces non agricoles. Plus particulièrement la présente invention concerne une composition renfermant l'acide nonanoïque.

### ART ANTERIEUR

Dans la lutte contre les mauvaises herbes, les mousses, les algues et/ou les lichens, la tendance actuelle est d'utiliser des préparations de plus en plus respectueuses de l'environnement tant chez les agriculteurs que les jardiniers professionnels ou particuliers.

En France, la loi de transition énergétique pour la croissance verte de 2015 a un objectif de zéro pesticide dans l'ensemble des espaces publics à compter du 1er janvier 2017. Il s'ensuit une interdiction d'usage des pesticides par l'Etat, les collectivités locales et les établissements publics pour l'entretien des espaces verts et des voiries. Cette interdiction d'usage sera étendue aux jardiniers amateurs dès le premier janvier 2019.

Toutefois, les produits de biocontrôle qualifiés « à faible risque » ou dont l'usage est autorisé dans le cadre de l'agriculture biologique peuvent être utilisés.

Cette loi a donné lieu au développement de méthodes alternatives comme le désherbage thermique (flamme directe, infrarouge, air chaud, vapeur, eau chaude), le désherbage mécanique (binette, sarcleuse, brosse rotative, balayeuse), paillage et l'usage de produits phytosanitaires « biologiques ».

Dans cette dernière catégorie sont présents les acides gras tel que l'acide pélargonique. L'acide pélargonique, dénommé également acide nonanoïque, est un acide carboxylique composé de neuf atomes de carbone (C₉H₁₈O₂) qui est produit notamment à partir de l'acide oléique par oxydation.

L'acide pélargonique fait partie des acides gras en C₇-C₂₀ ne devant pas avoir d'effets délétères sur la santé humaine ou animale ainsi que sur les eaux souterraines ni des effets inacceptables sur l'environnement. L'acide pélargonique peut être utilisé en tant qu'insecticide, acaricide, herbicide et régulateur de croissance végétale. Plus particulièrement, lorsqu'il est appliqué sur le feuillage des plantes, l'acide pélargonique détruit la cuticule des plantes et rompt la perméabilité des membranes cellulaires. Ceci induit une fuite incontrôlée du contenu des cellules qui conduit *in fine* à la mort du tissu. De par ce mode d'action, l'acide pélargonique est un herbicide de contact à large spectre et à action rapide.

L'acide pélargonique a initialement été utilisé en association avec un autre herbicide. Par exemple, la demande de brevet W02003015514 A1 décrit une composition herbicide post-émergence composée de sels d'ammonium de glyphosate et d'acides en C₆-C₁₁ et plus particulièrement de l'acide pélargonique réduisant le temps d'action sur les plantes.

Cependant, pour réduire le profil toxicologique et écotoxicologique de ces herbicides, il a été proposé une composition herbicide sous forme d'émulsion aqueuse dont la substance active est l'acide nonanoïque. La composition décrite dans la demande de brevet WO 2011095735 A2 renferme au moins 50 % en poids d'acide nonanoïque, au moins 3 % d'éthanol et de 2 à 10 % d'un tensio-actif le dioctyle sulfosuccinate de sodium. Cette composition est commercialisée par la société Syngenta sous la marque Katoun^{®} (de la société JADE).

Malgré cette efficacité sur les mauvaises herbes, les mousses et les algues, on cherche encore à réduire la quantité appliquée afin de limiter l'impact environnemental de ces acides gras pour répondre aux exigences de la mise sur le marché de tels produits phytopharmaceutiques (Directive 91/414/CEE).

### BUTS DE L'INVENTION

Par conséquent, un premier but de l'invention est notamment de proposer une préparation herbicide la plus respectueuse possible de l'environnement.

Un autre but de l'invention est de proposer une composition herbicide à base d'acide nonanoïque en réduisant les quantités d'herbicide appliquées, ou de proposer une composition à efficacité herbicide améliorée.

Un autre but de l'invention est de proposer une composition herbicide facile à appliquer sur les mauvaises herbes, les algues, mousses et lichens.

Pour une meilleure application et répartition des herbicides sur les cultures ou surfaces non agricoles à traiter, les substances actives ne sont généralement pas utilisées à l'état pur : l'eau étant le diluant le plus utilisé. Or l'acide nonanoïque étant insoluble dans l'eau, il est nécessaire de lui adjoindre, comme dans WO2011095735 un émulsifiant. Les brevets US 20130231247 A1 et WO 2011161133 A2 décrivent également des émulsions herbicides composées de l'acide pélargonique ou d'un mélange d'acides carboxyliques en C₆-C₁₀, d'un solvant organique, d'un tensio-actif du type *N*-laurylsarcosine, d'un tensio-actif non ionique et d'un acide aminé.

### DESCRIPTION DETAILLEE

Ces buts, ainsi que d'autres, sont atteints par la composition selon la présente invention. En effet, les inventeurs ont découvert, de manière surprenante, que l'adjonction, à l'acide nonanoïque (dénommé aussi acide pélargonique), d'un alkyl polypentoside, permet non seulement d'obtenir une composition qui est auto-émulsifiable, mais qui présente également, à l'état pur ou dilué, un effet herbicide plus important que l'acide nonanoïque seul ou formulé avec d'autres tensio-actifs de type alcool gras ou ester méthylique, contre les adventices, algues, mousses et lichens.

Les adventices ou mauvaises herbes peuvent être définies comme toute plante poussant dans un espace sans y avoir été intentionnellement mise en place cette année-là par l'agriculteur ou le jardinier.

La présente invention concerne donc une composition phytopharmaceutique comprenant la combinaison :
- d'un constituant A comprenant au moins un alkyl pentoside composé d'une chaîne alkyle linéaire ou ramifiée, avec ou sans insaturation, ayant 4 à 22 atomes de carbone et d'un pentose de la série D ou L ayant un degré moyen d'oligomérisation compris entre 1 et 3, et
- d'un constituant B comprenant au moins un herbicide incluant l'acide nonanoïque ou l'un de ses sels, en tant qu'herbicide,
le rapport massique du constituant A au constituant B étant compris entre 0,01 et 0,8.

Par alkyl pentoside ou alkyl-polypentoside (ces deux termes seront employés indifféremment dans le texte de la demande), on entend, dans l'ensemble de la demande, des substances formées d'une partie hydrophile constituée d'un pentose, avec un degré d'oligomérisation moyen compris entre 1 et 3 et d'une partie lipophile constituée d'une chaine alkyle. Le pentose peut être choisi parmi le ribose, l'arabinose, le xylose, le le lyxose, le ribulose ou le xylulose, de forme isomérique alpha ou bêta. Ledit pentose peut être de la série L ou D, et se présenter sous sa forme furanosique ou pyranosique.

La chaine alkyle de l'alkyl pentoside est avantageusement une chaine alkyle linéaire ou ramifiée, avec ou sans insaturation, choisie parmi les chaînes alkyle ayant de 8 à 10 atomes de carbone, de 10 à 12 atomes de carbone, de 12 à 14 atomes de carbone ou une chaîne amyle. Plus particulièrement, l'alkyl pentoside utilisé est un amyl-xyloside ou un alkyl en C₁₀/C₁₂ xyloside.

Le constituant A de la composition phytopharmaceutique selon l'invention peut comprendre également au moins un alkyl glycoside ou alkyl-polyglycoside (ces deux termes seront employés indifféremment dans le texte de la demande), de préférence un alkyl glucoside ou alkyl polyglucoside, dont la chaine alkyle est une chaîne alkyle linéaire ou ramifiée, avec ou sans insaturation, choisie parmi les chaînes alkyle ayant de 14 à 18 atomes de carbone et un degré d'oligomérisation compris entre 1 et 3.

Ces alkyl pentosides et alkyl glycosides sont commercialisés notamment par la société Wheatoleo sous les noms commerciaux d'Appyclean 6505, Appyclean 6781, Appyclean 6382, Appyclean 6552, Appyclean 6548/6669, Appyclean 6724, Appyclean 6781-S, Appyclean 6782-S, Appyclean 6783-S. Ce sont des molécules issues de ressources naturelles (alcools naturels et pentoses obtenus à partir d'hydrolyse d'hémicellulose tel que paille ou son de blé), à biodégradabilité élevée.

La composition phytopharmaceutique selon l'invention se présente avantageusement sous la forme d'un concentré auto-émulsifiable dans lequel la concentration massique en acide nonanoïque est comprise entre 50% et 95%, de préférence entre 50% et 85%, de préférence encore entre 65% et 80 % par rapport à la masse totale de la composition.

En variante, la composition phytopharmaceutique peut se présenter sous la forme d'une émulsion de type huile dans eau (h/e) ou eau dans huile (e/h). Par définition, une émulsion est un mélange de deux substances ou phases non miscibles. Dans l'émulsion, la phase sous forme de microgouttelettes est la phase discontinue, tandis que la phase qui entoure les microgouttelettes est appelée phase continue. Ainsi, une émulsion eau dans l'huile (e/h) est composée d'une phase discontinue aqueuse dispersée dans une phase continue huileuse et à l'inverse une émulsion huile dans eau (h/e) est composée d'une phase discontinue huileuse dispersée dans une phase continue aqueuse.

La composition phytopharmaceutique peut également comprendre au moins un autre tensio-actif non ionique ou anionique, un agent de stabilisation tel qu'une cyclodextrine, un phyllosilicate, ou un polysaccharide, ou encore un adjuvant hydrophile.

Plus particulièrement, ledit tensio-actif non ionique ou anionique peut être choisi parmi un alcool gras éthoxylé, un ester d'acides gras et polyols, un ester de sorbitan, un ester de sorbitan polyéthoxylé, une huile végétale éthoxylée, un alcool gras alcoxylé, un alkyl polyglucoside, un sel alcalin d'acides gras et résiniques, un alkylarylsulfonate, un alkylsulfosuccinate, un alkyl sulfate, un alkyl éther sulfate, un amide d'éther sulfate, et un dérivé dodécylbenzène sulfonique, ou un de leurs mélanges. Préférentiellement la composition phytopharmaceutique comporte un ester méthylique d'acide gras et une huile végétale éthoxylée (par exemple issue de colza, ricin ou abricot) comprenant un nombre de moles d'oxyde d'éthylène compris entre 5 et 100 et de préférence compris entre 10 et 50. Par exemple, la préparation est réalisée à partir d'un ester méthylique d'huile de colza et d'une huile de colza éthoxylée contenant 20 moles d'oxyde d'éthylène commercialisée sous le nom de Sepiter C200 ou Surfaline C20.

Présentée sous la forme d'une émulsion, la composition phytopharmaceutique peut également être stabilisée par une alpha, béta ou gamma cyclodextrine, commercialisées sous le nom de Cavamax W6, Cavamax W7, Cavamax W8 ou toute autre substance contribuant à la stabilité de l'émulsion. En particulier, il est possible d'incorporer, seuls ou en mélanges, des composés minéraux comme des phyllosilicates, ou des composés organiques comme des lécithines naturelles ou modifiées d'origines végétale ou animale, des polysaccharides tels que des exopolysaccharides non ioniques ou anioniques provenant de bactéries hydrothermales ou non (dextranes, xanthanes, succinoglycane, galactomannane, ....) ou d'origine végétale (alginates, carraghénanes, agars).

Il est possible d'ajouter également à la phase aqueuse de ladite composition phytopharmaceutique et à faible dose, de l'ordre de 0,001% à 2% en poids par rapport au poids total de l'émulsion, des adjuvants hydrophiles, tels que des agents de protection biocide, des dispersants, des chélatants, des antioxydants, des agents de conservation (par exemple un dérivé isothiazolone), bien connus de l'homme de l'art.

Dans la composition phytopharmaceutique selon la présente invention le rapport massique du constituant A au constituant B est avantageusement compris entre 0,05 et 0,6, de préférence entre 0,1 et 0,5.

Enfin, selon l'invention, aussi bien dans le concentré auto-émulsifiable que dans l'émulsion prête à l'emploi, il est également possible d'ajouter d'autres substances herbicides de synthèses ou naturelles, comme l'acide acétique, l'acide citrique, l'huile de clous de girofle, la farine de gluten...

Notamment le constituant B peut être un mélange comprenant l'acide nonanoïque en tant que premier herbicide et au moins un autre herbicide dénommé second herbicide, selon un rapport massique second herbicide/acide nonanoïque compris entre une valeur supérieure à 0 et 0,99, de préférence entre 0,04 et 0,5, de préférence encore entre 0,1 et 0,2.

La présente invention se rapporte aussi à l'utilisation de la composition phytopharmaceutique pour la protection des cultures ou des espaces non agricoles, notamment pour lutter contre les adventices, les mousses, les algues et/ou les lichens.

Cette utilisation comprend avantageusement l'application par pulvérisation d'une composition phytopharmaceutique selon la présente invention sur les mauvaises herbes, à l'état pur ou dilué à une dose d'acide nonanoïque comprise entre 1 et 100 L/ha, de préférence comprise entre 5 et 50 L/ha, de préférence encore entre 16 et 32 L/ha par application. Ladite composition peut par exemple être appliquée à l'état dilué, dans un volume d'eau compris entre 10 et 1000 L/ha.

La présente invention est illustrée ci-après par les exemples non-limitatifs suivants :

### EXEMPLES

### Exemple 1 : formulation d'un concentré auto-émulsifiable (553)

| Substance/produit | Pourcentage |
|---|---|
| Acide nonanoïque | 70,4 |
| Huile de colza éthoxylée 20 OE | 14,2 |
| Ester méthylique de colza | 3,9 |
| Amyl Xyloside | 7,7 |
| Mélange Amyl Xyloside C₁₀/C₁₂ Xyloside | 3,8 |
| TOTAL | 100,0 |

### Exemple 2 : formulation d'un concentré auto-émulsifiable (553V)

| Substance/produit | Pourcentage |
|---|---|
| Acide nonanoïque | 59,5 |
| Acide acétique glacial | 9,9 |
| Huile de colza éthoxylée 20 OE | 14,7 |
| Ester méthylique de colza | 4,0 |
| Amyl Xyloside | 7,9 |
| Mélange Amyl Xyloside C₁₀/C₁₂ Xyloside | 4,0 |
| TOTAL | 100,0 |

### Exemple 3 : formulation d'un concentré auto-émulsifiable (554)

| Substance/produit | Pourcentage |
|---|---|
| Acide nonanoïque | 70,4 |
| Huile de colza éthoxylée 20 OE | 14,2 |
| Ester méthylique de colza | 3,9 |
| Amyl Xyloside | 3,8 |
| Mélange Amyl Xyloside C₁₀/C₁₂ Xyloside | 7,7 |
| TOTAL | 100,0 |

### Exemple 4 : formulation d'un concentré auto-émulsifiable (555)

| Substance/produit | Pourcentage |
|---|---|
| Acide nonanoïque | 59,5 |
| Acide acétique glacial | 9,9 |
| Ester méthylique de colza | 4,0 |
| Amyl Xyloside | 7,9 |
| Mélange Amyl Xyloside/ C₁₀/C₁₂ Xyloside | 4,0 |
| Mélange polyglycosides C₁₄-C₁₈ de paille de blé/ alcool gras en C₁₄-C₁₈ | 14,7 |
| TOTAL | 100,0 |

### Exemple 5 : formulation d'un produit prêt à l'emploi (556)

| Substance/produit | Pourcentage |
|---|---|
| Acide nonanoïque | 4,3776 |
| Ester méthylique de colza | 0,32 |
| Huile de colza éthoxylée 20 OE | 0,9408 |
| Amyl Xyloside | 0,5056 |
| Mélange Amyl Xyloside/ C₁₀/C₁₂ Xyloside | 0,256 |
| Alpha cyclodextrine | 0,4 |
| Eau | 93,2 |
| TOTAL | 100,0 |

### Efficacité des formulations

Différentes formulations ont été testées par rapport au produit de référence Katoun^{®} contenant 680 g/L d'acide nonanoïque. Ce produit est actuellement commercialisé par la société Syngenta et a été homologué à la dose de 16 L/ha par la société Jade.

Les essais sont réalisés de préférence sur la véronique de perse (*Veronica persica*), une plante dicotylédone et le Raygrass (*Lolium perenne*)*.* Le Raygrass, plante monocotylédone, est connue pour être une plante moins sensible à l'acide nonanoïque que les plantes dicotylédones, certainement du fait de son port érigé et de la finesse de ses feuilles. Les semis sont réalisés dans du terreau préalablement réparti dans des barquettes de 160 cm² (10 cm x 16 cm).

Après les semis, les barquettes sont disposées sous un éclairage artificiel produit par des LED (18 W ; Solmore) placées à 40 cm au-dessus de la surface du sol et selon un rythme nycthéméral 16 h jour/ 8 h nuit.

Les essais décrits ci-après sont réalisés sur des plantules de Raygrass d'environ 10 cm ou des plantules de véronique de perse au stade deux feuilles.

Les formulations herbicides testées sont pulvérisées sur les plantes à l'aide d'un aérographe.

Les plantules sont exposées à une dose équivalente de 16 L/ha d'acide nonanoïque dans un volume d'eau de 200 L.

### Efficacité des produits 553 et 553V sur Raygrass et Véronique de perse

Dans cet essai, l'efficacité des produits 553 et 553V est comparée à celle du produit de référence Katoun^{®}.

Préalablement à l'utilisation, des solutions du produit Katoun^{®}, 553 et 553V sont préparées à 1,6 % en poids dans de l'eau.

Dès 90 minutes après l'exposition, un flétrissement marqué des plantules de raygrass et de véronique de perse est observé aussi bien avec la formulation Katoun^{®} que les formulations 553 et 553V. Après 24 h, le flétrissement et le jaunissement des plantules sont plus marqués avec les produits 553 et 553V qu'avec le produit Katoun^{®}.

### Essai du produit 553 et 553V - Simulation d'une pluie

Dans cet essai, l'efficacité des produits 553 et 553V est comparée à celle du produit de référence Katoun^{®} lors d'un essai avec simulation de pluie.

Préalablement à l'utilisation, des solutions du produit Katoun^{®}, 553 et 553V sont préparées à 1,6 % en poids dans de l'eau.

Après l'exposition aux herbicides, les plantules sont séchées délicatement durant 60 minutes à 20°C sous une légère ventilation.

Les plantules sont alors soumises à une pluie simulée de 18 mm durant 45 minutes. Vingt-quatre heures après le traitement, aussi bien avec le produit Katoun^{®} que les produits 553 et 553V un fanage du raygrass est observé. Toutefois, après 48 heures d'observation, le flétrissement et le jaunissement des plantules sont plus marqués avec les produits 553 et 553V qu'avec le produit Katoun^{®}.

## Revendications

1. Composition phytopharmaceutique comprenant la combinaison :
- d'un constituant A comprenant au moins un alkyl pentoside composé d'une chaîne alkyle linéaire ou ramifiée, avec ou sans insaturation, ayant 4 à 22 atomes de carbone et d'un pentose de la série D ou L ayant un degré moyen d'oligomérisation compris entre 1 et 3, et
- d'un constituant B comprenant au moins un herbicide incluant l'acide nonanoïque ou l'un de ses sels en tant qu'herbicide,
le rapport massique du constituant A au constituant B étant compris entre 0,01 et 0,8.

2. Composition phytopharmaceutique selon la revendication 1, **caractérisée en ce que** le pentose de l'alkyl pentoside est choisi parmi le ribose, l'arabinose, le xylose, le lyxose, le ribulose ou le xylulose, de forme isomérique alpha ou béta.

3. Composition phytopharmaceutique selon la revendication 1 ou 2, **caractérisée en ce que** le pentose de l'alkyl pentoside se présente sous une forme furanosique ou pyranosique.

4. Composition phytopharmaceutique selon l'une quelconque des revendications précédentes, **caractérisée en ce que** la chaîne alkyle de l'alkyl pentoside est une chaîne alkyle linéaire ou ramifiée, avec ou sans insaturation, choisie parmi les chaînes alkyle ayant de 8 à 10 atomes de carbone, de 10 à 12 atomes de carbone, de 12 à 14 atomes de carbone ou une chaîne amyle.

5. Composition phytopharmaceutique selon l'une quelconque des revendications précédentes, **caractérisée en ce que** l'alkyl pentoside est un amyl-xyloside.

6. Composition phytopharmaceutique selon l'une quelconque des revendications précédentes, **caractérisée en ce que** le constituant A comprend également au moins un alkyl glycoside, de préférence un alkyl glucoside, dont la chaine alkyle est une chaîne alkyle linéaire ou ramifiée, avec ou sans insaturation, choisie parmi les chaînes alkyle ayant de 14 à 18 atomes de carbone et un degré d'oligomérisation compris entre 1 et 3.

7. Composition phytopharmaceutique selon l'une quelconque des revendications précédentes, **caractérisée en ce qu'**elle se présente sous la forme d'un concentré auto-émulsifiable dans lequel la concentration massique en acide nonanoïque est comprise entre 50% et 95%, de préférence entre 50% et 85%, de préférence encore entre 65% et 80 % par rapport à la masse totale de la composition.

8. Composition phytopharmaceutique selon l'une quelconque des revendications précédentes, **caractérisée en ce qu'**elle se présente sous la forme d'une émulsion de type huile dans eau (h/e) ou eau dans huile (e/h).

9. Composition phytopharmaceutique selon l'une quelconque des revendications précédentes, **caractérisée en ce qu'**elle comprend au moins un autre tensio-actif non ionique ou anionique, un agent de stabilisation tel qu'une cyclodextrine, un phyllosilicate, ou un polysaccharide, ou encore un adjuvant hydrophile.

10. Composition phytopharmaceutique selon l'une quelconque des revendications précédentes, **caractérisée en ce que** le rapport massique du constituant A au constituant B est compris entre 0,05 et 0,6, de préférence entre 0,1 et 0,5.

11. Composition phytopharmaceutique selon l'une quelconque des revendications précédentes, **caractérisée en ce que** le constituant B est un mélange comprenant l'acide nonanoïque en tant que premier herbicide et au moins un autre herbicide dénommé second herbicide, selon un rapport massique second herbicide/acide nonanoïque compris entre une valeur supérieure à 0 et 0,99, de préférence entre 0,04 et 0,5, de préférence encore entre 0,1 et 0,2.

12. Utilisation de la composition selon l'une quelconque des revendications précédentes pour la protection des cultures ou des espaces non agricoles.

13. Utilisation de la composition selon l'une quelconque des revendications 1 à 11 pour lutter contre les adventices, les mousses, les algues et/ou les lichens.

14. Utilisation selon l'une des revendications 12 ou 13 comprenant l'application par pulvérisation d'une composition selon l'une quelconque des revendications 1 à 11 sur les mauvaises herbes, à l'état pur ou dilué à une dose d'acide nonanoïque comprise entre 1 et 100 Uha, de préférence comprise entre 5 et 50 Uha, de préférence encore entre 16 et 32 L/ha par application.

15. Utilisation selon la revendication 14, **caractérisée en ce que** la composition est appliquée à l'état dilué, dans un volume d'eau compris entre 10 et 1000 Uha.

16. Utilisation d'une adjonction d'alkyl pentoside composé d'une chaîne alkyle linéaire ou ramifiée, avec ou sans insaturation, ayant 4 à 22 atomes de carbone avec un pentose de la série D ou L ayant un degré moyen d'oligomérisation compris entre 1 et 3, pour augmenter l'effet herbicide de l'acide nonanoïque ou l'un de ces sels, contre les adventices, algues mousses et lichens, dans laquelle, le rapport massique entre l'Adjonction et l'acide nonanoïque ou l'un de ces sels est compris entre 0,01 et 0,8.

## Patentansprüche

1. Phytopharmazeutische Zusammensetzung, umfassend die Kombination:
- eines Bestandteils A, umfassend mindestens ein Alkylpentosid, zusammengesetzt aus einer linearen oder verzweigten Alkylkette mit oder ohne Ungesättigtheit mit 4 bis 22 Kohlenstoffatomen und einer Pentose der Serie D oder L mit einem mittleren Oligomerisationsgrad zwischen 1 und 3, und
- mit einem Bestandteil B, umfassend Nonansäure oder eins ihrer Salze als Herbizid,
wobei das Massenverhältnis des Bestandteils A zum Bestandteil B zwischen 0,01 und 0,8 liegt.

2. Phytopharmazeutische Zusammensetzung nach Anspruch 1, **dadurch gekennzeichnet, dass** die Pentose des Alkylpentosids aus Ribose, Arabinose, Xylose, Lyxose, Ribulose oder Xylulose isomerischer Alpha- oder Beta-Form ausgewählt ist.

3. Phytopharmazeutische Zusammensetzung nach Anspruch 1 oder 2, **dadurch gekennzeichnet, dass** die Pentose des Alkylpentosids in furanosischer oder pyranosischer Form vorliegt.

4. Phytopharmazeutische Zusammensetzung nach einem der vorangehenden Ansprüche, **dadurch gekennzeichnet, dass** die Alkylkette des Alkylpentosids eine lineare oder verzweigte Alkylkette mit oder ohne Ungesättigtheit ist, ausgewählt aus den Alkylketten mit 8 bis 10 Kohlenstoffatomen, 10 bis 12 Kohlenstoffatomen, 12 bis 14 Kohlenstoffatomen oder eine Amylkette.

5. Phytopharmazeutische Zusammensetzung nach einem der vorangehenden Ansprüche, **dadurch gekennzeichnet, dass** das Alkylpentosid ein Amylxylosid ist.

6. Phytopharmazeutische Zusammensetzung nach einem der vorangehenden Ansprüche, **dadurch gekennzeichnet, dass** der Bestandteil A ebenfalls mindestens ein Alkylglycosid umfasst, vorzugsweise ein Alkylglucosid, dessen Alkylkette eine lineare oder verzweigte Alkylkette mit oder ohne Ungesättigtheit ist, ausgewählt aus den Alkylketten mit 14 bis 18 Kohlenstoffatomen und einem Oligomerisierungsgrad zwischen 1 und 3.

7. Phytopharmazeutische Zusammensetzung nach einem der vorangehenden Ansprüche, **dadurch gekennzeichnet, dass** sie in Form eines selbstemulgierbaren Konzentrats vorliegt, in welchem die Massenkonzentration an Nonansäure zwischen 50 % und 95 %, vorzugsweise zwischen 50 % und 85 %, ebenfalls vorzugsweise zwischen 65 % und 80 % im Verhältnis zur Gesamtmasse der Zusammensetzung liegt.

8. Phytopharmazeutische Zusammensetzung nach einem der vorangehenden Ansprüche, **dadurch gekennzeichnet, dass** sie in Form einer Emulsion vom Typ Öl-in-Wasser (O/W) oder Wasser-in-Öl (W/O) vorliegt.

9. Phytopharmazeutische Zusammensetzung nach einem der vorangehenden Ansprüche, **dadurch gekennzeichnet, dass** sie mindestens ein anderes nichtionisches oder anionisches Tensid, ein Stabilisationsmittel wie ein Cyclodextrin, ein Phyllosilicat oder ein Polysaccharid oder auch einen hydrophilen Zusatz umfasst.

10. Phytopharmazeutische Zusammensetzung nach einem der vorangehenden Ansprüche, **dadurch gekennzeichnet, dass** das Massenverhältnis des Bestandteils A zum Bestandteil B zwischen 0,05 und 0,6, vorzugsweise zwischen 0,1 und 0,5, liegt.

11. Phytopharmazeutische Zusammensetzung nach einem der vorangehenden Ansprüche, **dadurch gekennzeichnet, dass** der Bestandteil B ein Gemisch ist, das Nonansäure als erstes Herbizid und mindestens ein anderes Herbizid, bezeichnet als zweites Herbizid, in einem Massenverhältnis zweites Herbizid/Nonansäure zwischen einem Wert über 0 und 0,99, vorzugsweise zwischen 0,04 und 0,5, ebenfalls vorzugsweise zwischen 0,1 und 0,2 umfasst.

12. Verwendung der Zusammensetzung nach einem der vorangehenden Ansprüche für den Schutz der Kulturen oder der nicht-landwirtschaftlichen Flächen.

13. Verwendung der Zusammensetzung nach einem der Ansprüche 1 bis 11 zur Bekämpfung von Unkräutern, Moosen, Algen und/oder Flechten.

14. Verwendung nach einem der Ansprüche 12 oder 13, umfassend das Anwenden durch Versprühen einer Zusammensetzung nach einem der Ansprüche 1 bis 11 auf die Unkräuter in reinem oder verdünntem Zustand in einer Dosis Nonansäure zwischen 1 und 100 L/ha, vorzugsweise zwischen 5 und 50 L/ha, ebenfalls vorzugsweise zwischen 16 und 32 L/ha pro Anwendung.

15. Verwendung nach Anspruch 14, **dadurch gekennzeichnet, dass** die Zusammensetzung in verdünntem Zustand in einem Wasservolumen zwischen 10 und 1000 L/ha angewendet wird.

16. Verwendung eines Alkylpentosidzusatzes, der aus einer geradkettigen oder verzweigten, ungesättigten oder ungesättigten Alkylkette mit 4 bis 22 Kohlenstoffatomen mit einer Pentose der D- oder L-Reihe mit einem mittleren Oligomerisierungsgrad zwischen 1 und 3 besteht, zur Erhöhung der herbiziden Wirkung von Nonansäure oder einem ihrer Salze gegen Unkräuter, Algen, Moose und Flechten, wobei das Massenverhältnis zwischen dem Zusatzstoff und der Nonansäure oder einem ihrer Salze zwischen 0,01 und 0,8 liegt.

## Claims

1. A plant protection composition comprising the combination of:
- a constituent A comprising at least one alkyl pentoside composed of a linear or branched alkyl chain, with or without unsaturation, having 4 to 22 carbon atoms, and a pentose of D- or L- configuration having a mean degree of oligomerization of between 1 and 3, and
- a constituent B comprising at least nonanoic acid or one of the salts thereof as herbicide,
the weight ratio of constituent A to constituent B being between 0.01 and 0.8.

2. The plant protection composition according to claim 1, **characterized in that** the pentose of alkyl pentoside is selected from among ribose, arabinose, xylose, lyxose, ribulose or xylulose, of alpha or beta isomeric form.

3. The plant protection composition according to claim 1 or 2, **characterized in that** the pentose of the alkyl pentoside is in furanose or pyranose form.

4. The plant protection composition according to any of the preceding claims, **characterized in that** the alkyl chain of the alkyl pentoside is a linear or branched alkyl chain, with or without unsaturation, selected from among alkyl chains having 8 to 10 carbon atoms, 10 to 12 carbon atoms, 12 to 14 carbon atoms or an amyl chain.

5. The plant protection composition according to any of the preceding claims, **characterized in that** the alkyl pentoside is an amyl-xyloside.

6. The plant protection composition according to any of the preceding claims, **characterized in that** constituent A also comprises at least one alkyl glycoside, preferably an alkyl glucoside having an alkyl chain that is a linear or branched alkyl chain, with or without unsaturation, selected from among alkyl chains having 14 to 18 carbon atoms and a degree of oligomerization of between 1 and 3.

7. The plant protection composition according to any of the preceding claims, **characterized in that** it is in the form of a self-emulsifying concentrate in which the weight concentration of nonanoic acid is between 50 % and 95 %, preferably between 50 % and 85 %, more preferably between 65 % and 80 % relative to the total weight of the composition.

8. The plant protection composition according to any of the preceding claims, **characterized in that** it is in the form of an emulsion of oil-in-water (O/W) or water-in-oil (W/O) type.

9. The plant protection composition according to any of the preceding claims, **characterized in that** it comprises at least one other non-ionic or anionic surfactant, a stabilizing agent such as a cyclodextrin, a phyllosilicate or polysaccharide, or a hydrophilic additive.

10. The plant protection composition according to any of the preceding claims, **characterized in that** the weight ratio of constituent A to constituent B is between 0.05 and 0.6, preferably between 0.1 and 0.5.

11. The plant protection composition according to any of the preceding claims, **characterized in that** constituent B is a mixture comprising nonanoic acid as first herbicide and at least one other herbicide called second herbicide, in a weight ratio of second herbicide /nonanoic acid having a value between higher than 0 and 0.99, preferably between 0.04 and 0.5, more preferably between 0.1 and 0.2.

12. Use of the composition according to any of the preceding claims, for the protection of crops or non-agricultural land.

13. Use of the composition according to any of claims 1 to 11 to combat adventive plants, mosses, algae and/or lichens.

14. The use according to one of claims 12 or 13 comprising the application of a composition according to any of claims 1 to 11 by spraying onto weeds, in the pure state or diluted at a nonanoic acid dose of between 1 and 100 L/ha, preferably between 5 and 50 L/ha, more preferably between 16 and 32 L/ha per application.

15. The use according to claim 14, **characterized in that** the composition is applied in the diluted state, in a volume of water of between 10 and 1000 L/ha.

16. Use of an addition of alkyl pentoside composed of a linear or branched alkyl chain, with or without unsaturation, having 4 to 22 carbon atoms with a pentose of the D or L series having an average degree of oligomerization of between 1 and 3, to increase the herbicidal effect of nonanoic acid or one of these salts, against weeds, moss algae and lichens, in which, the mass ratio between the Addition and nonanoic acid or one of these salts is between 0.01 and 0.8.
